(19)

**Europäisches Patentamt**
**European Patent Office**
**Office européen des brevets**

(11) **EP 4 686 023 A1**

(12) **EUROPEAN PATENT APPLICATION**

(43) Date of publication:
**28.01.2026 Bulletin 2026/05**

(21) Application number: **25188226.2**

(22) Date of filing: **08.07.2025**

(51) International Patent Classification (IPC):
**H02H 3/093** (2006.01)   **H02H 6/00** (2006.01)
**H02J 3/14** (2026.01)   **H02H 7/26** (2006.01)
**H02H 3/033** (2006.01)   **H02H 3/00** (2006.01)

(52) Cooperative Patent Classification (CPC):
**H02H 7/26; H02H 3/033; H02H 3/0935;**
**H02H 6/005; H02J 3/14;** H02H 3/006;
H02J 2310/12; H02J 2310/14; H02J 2310/60

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **25.07.2024 US 202418784628**

(71) Applicant: **Schneider Electric USA, Inc.**
**Andover, MA 01810 (US)**

(72) Inventor: **Jakupi, Andi**
**Marion, IA (US)**

(74) Representative: **Manitz Finsterwald**
**Patent- und Rechtsanwaltspartnerschaft mbB**
**Martin-Greif-Straße 1**
**80336 München (DE)**

(54) **CONTROLLING LOAD CENTERS BASED ON THERMAL CHARACTERISTICS**

(57)     Systems/methods for managing a load center (200) uses a thermal model of an overcurrent protection device (204) to adjust the load center (200) energy level. The systems/methods provide an energy management system (212) that manages the amount of load energy (214) in the load center (200) to allow the load center (200) to operate in an overloaded state without inducing thermal tripping of the load center (200). The energy management system (212) determines a thermal shedding time that provides a margin or threshold against the thermal tripping, then determines, for a given load center (200) energy level, whether the load center (200) has been operating in an overloaded state for a time that equals or exceeds the thermal shedding time. The energy management system (212) thereafter determines any load (218) shedding that may be needed to reduce the load (218) energy level. This arrangement allows the load center (200) to remain in an overloaded state without thermal tripping.

**FIG. 2**

**EP 4 686 023 A1**

**Description**

TECHNICAL FIELD

The present disclosure relates to electrical distribution panels and other load centers, and particularly to systems and methods for monitoring and controlling such load centers based on their thermal properties and characteristics to prevent unwanted interrupts.

BACKGROUND

A load center in a home or building refers to the main point of distribution for utility power throughout the home or building. In most homes and buildings, the load center is an electrical distribution panel housed within a metal enclosure mounted on a wall in a utility closet, garage, and the like. The load center typically has a series of slots in which circuit protection devices, such as circuit breakers, relays, surge protectors, and the like, may be installed. Each of these devices provides power to and fault protection for a separate branch circuit in the home or building (e.g., kitchen, master bedroom, game room, etc.). This prevents a fault occurring in one branch circuit from affecting the power supplied to other branch circuits.

Most load centers are sized, or rated, when installed to ensure sufficient current carrying capacity to simultaneously power all typical loads on the branch circuits. For a residential dwelling, for example, the contemplated loads may include HVAC equipment, washer and dryer, electric range, water heater, refrigerator, and various appliances. As subsequent loads are added to the load center, especially large loads, such as an electric vehicle (EV) charger, pool pump, and the like, or existing loads are replaced (e.g., a larger HVAC unit), the demand for utility power may increase beyond the load center rating and cause the load center to operate in an "overloaded" state. When that happens, an overcurrent protection device (OCPD) in the load center interrupts or "trips" utility power to the branch circuits. The trips typically occur automatically, either instantly or after a fixed amount of time that is preset within the OCPD, depending on the level of overcurrent.

One way to prevent unwanted trips, or nuisance trips, is to upgrade the load center, for example, by installing a new, higher-rated load center, or by increasing the size (i.e., handle rating) of the OCPD in the existing load center. However, installing a new load center or replacing the OCPD in an existing load center can be a costly endeavor, typically requiring a certified electrician or other specially trained personnel to perform the installation or expansion. As well, such installation or expansion typically requires structural changes to walls and ceilings, especially for older residential dwellings, in order to accommodate new cabling and the like for the higher rating, which can further increase cost and complications.

Accordingly, a need exists for a way to manage load centers to avoid unwanted trips without having to install a new load center or expand an existing load center.

SUMMARY

Embodiments of the present disclosure relate to systems and methods for managing a load center to prevent unwanted trips without having to install a new load center, expand an existing load center, or update the utility service line. The systems and methods provide a way to manage the amount of load energy in the load center to allow the load center to operate in an overloaded state without inducing thermal tripping of the load center. These systems and methods may take the form of an energy management system that monitors the load center energy level and determines whether the load center is close to thermal tripping. To facilitate the monitoring, a thermal shedding time may be determined to provide a margin or threshold against the thermal tripping. The energy management system then determines, for a given load center energy level, whether the load center has been overloaded for a time equal to or greater than the thermal shedding time. The energy management system thereafter determines any load shedding that may be needed to reduce the load energy level. This monitoring and adjusting of load center energy level based on a thermal shedding time allows the load center to remain in an overloaded state without tripping.

Allowing the load center to operate in an overloaded state without thermal tripping provides several advantages and benefits. For example, homeowners and occupants can continue using their existing load centers rather than upgrading or replacing the load centers, thereby avoiding significant costs, disruption of routines, and stress. Further, electrical utilities can skip service upgrades and updating of electrical infrastructure that may be needed, for example, if multiple homeowners in a given area were to upgrade or replace their main load centers. The embodiments herein also help keep load center bus bars and service feeder conductors from being overloaded to an extent that damage occurs or where the main breaker is prevented from tripping. These embodiments also minimize interruptions of any expanded loads on the load center in the event load shedding is needed, allowing such loads to continue running normally for longer intervals while the load center is in an overloaded state.

In general, in one aspect, embodiments of the present disclosure relate to an energy management system for a load center. The system comprises, among other things, a processor and a storage unit coupled to the processor. The storage unit stores computer-readable instructions that, when executed by the processor, cause the processor to obtain a load center energy level from an overcurrent protection device in the load center, the load center energy level indicative of an amount of current flowing through the overcurrent protection device. The computer-readable instructions, when executed by the processor, further cause the processor to determine whether the load center is operating in an overloaded state based on the load center energy level, and adjust the load center energy level of the load center according to a thermal model of the overcurrent protection device to allow the load center to operate in an overloaded state without tripping the overcurrent protection device.

In general, in another aspect, embodiments of the present disclosure relate to a method of managing a load center. The method comprises, among other things, obtaining a load center energy level from an overcurrent protection device in the load center, the load center energy level indicative of an amount of current flowing through the overcurrent protection device. The method further comprises determining whether the load center is operating in an overloaded state based on the load center energy level, and adjusting the load center energy level of the load center according to a thermal model of the overcurrent protection device to allow the load center to operate in an overloaded state without tripping the overcurrent protection device.

In general, in yet another aspect, embodiments of the present disclosure relate to a load center. The load center comprises, among other things, a housing, an overcurrent protection device installed within the housing, and an energy management system installed within the housing and communicatively coupled to the overcurrent protection device. The energy management system is configured to, among other things, obtain a load center energy level from the overcurrent protection device, the load center energy level indicative of an amount of current flowing through an overcurrent protection device. The energy management system is further configured to determine whether the load center is operating in an overloaded state based on the load center energy level, and adjust the load center energy level of the load center according to a thermal model of the overcurrent protection device to allow the load center to operate in an overloaded state without tripping the overcurrent protection device.

In accordance with any one or more of the foregoing embodiments, adjusting the load center energy level of the load center comprises computing a thermal shedding time for the load center as a function of the load center energy level and a current rating of the overcurrent protection device, then determining whether the load center is operating in an overloaded state for an amount of time equal to or greater than the thermal shedding time, and issuing, responsive to the load center operating in an overloaded state for an amount of time equal to or greater than the thermal shedding time, a control signal configured to cause a specified load to be shed from the load center. In some embodiments, computing the thermal shedding time for the load center is performed in response to a determination that the load center energy level exceeds a thermal shedding threshold multiplied by the current rating of the overcurrent protection device.

In accordance with any one or more of the foregoing embodiments, adjusting the load center energy level is performed by immediately issuing a control signal configured to cause a specified load to be shed from the load center. In some embodiments, the control signal configured to cause a specified load to be shed from the load center is issued in response to a determination that the load center energy level exceeds a fast shedding threshold multiplied by a current rating of the overcurrent protection device.

In accordance with any one or more of the foregoing embodiments, adjusting the load center energy level is performed by computing a thermal recovery time for the load center as a function of the load center energy level and a current rating of the overcurrent protection device, determining whether a load has been shed from the load center for a time equal to the thermal recovery time, and issuing, responsive to the load having been shed from the load center for an amount of time equal to the thermal recovery time, a control signal configured to cause the load to be connected to the load center. In some embodiments, computing the thermal recovery time is performed in response to the load being identified as having been shed from the load center.

In accordance with any one or more of the foregoing embodiments, the thermal model of the overcurrent protection device is implemented as one or more lookup tables, and model values for the thermal model are retrieved from the one or more lookup tables.

BRIEF DESCRIPTION OF THE DRAWINGS

FIG. 1 illustrates an exemplary trip curve for circuit breaker in accordance with embodiments of the present disclosure;
FIG. 2 illustrates an exemplary load center in accordance with embodiments of the present disclosure;
FIG. 3 illustrates an exemplary energy management system in accordance with embodiments of the present disclosure;
FIG. 4 illustrates an exemplary operational flowchart for the energy management system in accordance with embodiments of the present disclosure;

FIG. 5 illustrates an exemplary thermal shedding flowchart for the energy management system in accordance with embodiments of the present disclosure;

FIG. 6 illustrates an exemplary quick shedding flowchart for the energy management system in accordance with embodiments of the present disclosure;

FIG. 7 illustrates an exemplary recovery and normal operation flowchart for the energy management system in accordance with embodiments of the present disclosure;

FIG. 8 illustrates an exemplary computing system that may be used for the energy management system in accordance with embodiments of the present disclosure; and

FIG. 9 illustrates an exemplary storage system that may be used for the energy management system in accordance with embodiments of the present disclosure.

DETAILED DESCRIPTION

This description and the accompanying drawings illustrate exemplary embodiments of the present disclosure and should not be taken as limiting, with the claims defining the scope of the present disclosure, including equivalents. Various mechanical, compositional, structural, electrical, and operational changes may be made without departing from the scope of this description and the claims, including equivalents. In some instances, well-known structures and techniques have not been shown or described in detail so as not to obscure the disclosure. Further, elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment.

As alluded to above, adding loads to an existing load center, especially large loads, or replacing a load with a larger load, may increase the demand for utility power beyond the load center rating and cause the load center to operate in an overloaded state. When the demand for power increases thusly, homeowners and occupants need to upgrade their load centers by upgrading the main breakers in the load centers (i.e., the OCPDs), the bus bars, and/or the service feeder conductors. Embodiments of the present disclosure allow the homeowners to avoid these large and costly upgrades by keeping the service entrance and electrical panel at the same rating, and instead operate the electrical panel in an overloaded state. These embodiments leverage several insights discerned by the present inventor regarding main breaker operation as well as certain types of loads, as discussed herein.

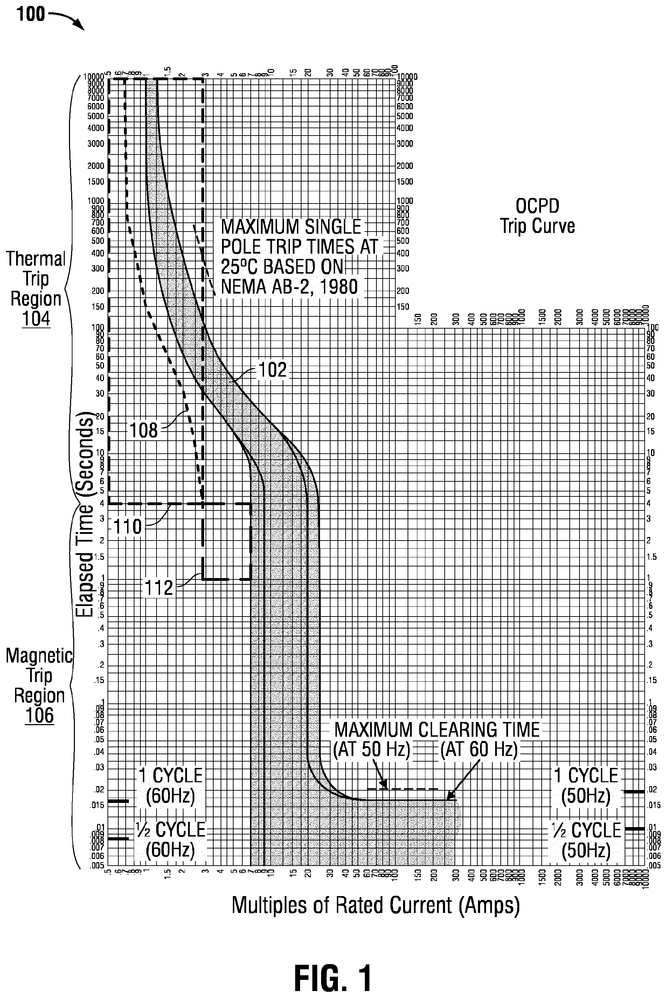

Referring now to FIG. 1, a typical trip curve 100 is shown, also called a time-current curve, for a model of a thermomagnetic circuit breaker often used as a main breaker in residential dwelling load centers (e.g., a molded case circuit breaker (MCCB)). The trip curve 100 is basically a thermal model of the thermomagnetic circuit breaker, with elapsed time indicated along the vertical axis, and multiples of rated current along the horizontal axis. The shaded area represents a trip area 106 that indicates the amount of current and the time, on a logarithmic scale, at which the circuit breaker is expected to trip at that current. The leftmost boundary of the trip area 102 represents a minimum time until the circuit breaker trips at a given current and the rightmost boundary represents a maximum time until the circuit breaker trips at that current.

As is well known, thermomagnetic circuit breakers like the one discussed above have a thermal trip mechanism in the form of a bimetallic strip, and also a magnetic trip mechanism in the form of a magnetic coil or solenoid. Current flowing through the bimetallic strip heats the bimetallic material and causes it to bend, which is useful for protecting against smaller overcurrents, typically less than 7X the rated current, as indicated by a thermal trip region 104. The magnetic coil or solenoid, on the other hand, reacts much faster, almost instantaneously, making it useful for protecting against larger overcurrents, typically from 7X the rated current up to tens or even thousands of Amps, as indicated by a magnetic trip region 106.

From the above trip curve 100, the present inventor realized that the load center can be operated beyond its rated current (i.e., in an overloaded state) for a period of time without tripping the circuit breaker so long as the load center current level and duration do not push the circuit breaker into the trip area 102 of the thermal trip region 104. The load center current level and duration can be monitored and, if they start getting close to the trip area 102, then load shedding may commence to reduce the current level and increase the remaining time until tripping. To facilitate this monitoring, a thermal shedding time, indicated by line 108, may be calculated or derived within the thermal trip region 104 to provide a margin or threshold against the trip area 102. Tripping can be prevented with near certainty so long as the load center current level and duration do not extend beyond the thermal shedding time 108. This can be accomplished by shedding certain loads from the load center as needed to maintain the load center current at a level below the thermal shedding time 108.

As a visualization aid, a thermal shedding region can be defined, indicated by box 110 in FIG. 1, that is coterminous with the thermal trip region 104 up to about 3X the rated current. As long as the load center current level and duration are within this thermal shedding region 110, then sufficient time remains for decisions to be made, based on the thermal shedding time 108, regarding whether to commence load shedding and which loads to shed to avoid a thermal trip. Similarly, a quick shedding region can be defined, indicated by box 112 in FIG. 1, that extends from the start of the magnetic trip region 104 at about 3X the rated current down to about one second of elapsed time. If the load center current level and duration are within this quick shedding region 112, then load shedding should begin immediately to avoid a magnetic trip.

The above scheme leverages the fact that most loads operate in cycles, meaning they turn On for a certain time interval, then enter an Off or a low-power state for a certain time interval, then turn back On again, and so forth. If a load turns On for only a few seconds before it enters an Off or in a low-power state, then it is feasible to allow that load to overload the load center for those few seconds, after which the load center will return to being underloaded again. In some embodiments, an estimate of the amount of overload (e.g., an overload percentage) can be determined and, based on the thermal model of the circuit breaker (i.e., trip curve 100), an estimate of the time until the circuit breaker trips can also be determined. This time estimate can then be used to determine how long a given load can be maintained in an On state and whether it can be allowed to finish its On cycle without interruption. Such an arrangement allows embodiments of the present disclosure to delay interruption of a given load long enough so that the load may not need to be interrupted at all, or at least minimize the interruption time, which can increase user or homeowner satisfaction with operation of the system or equipment.

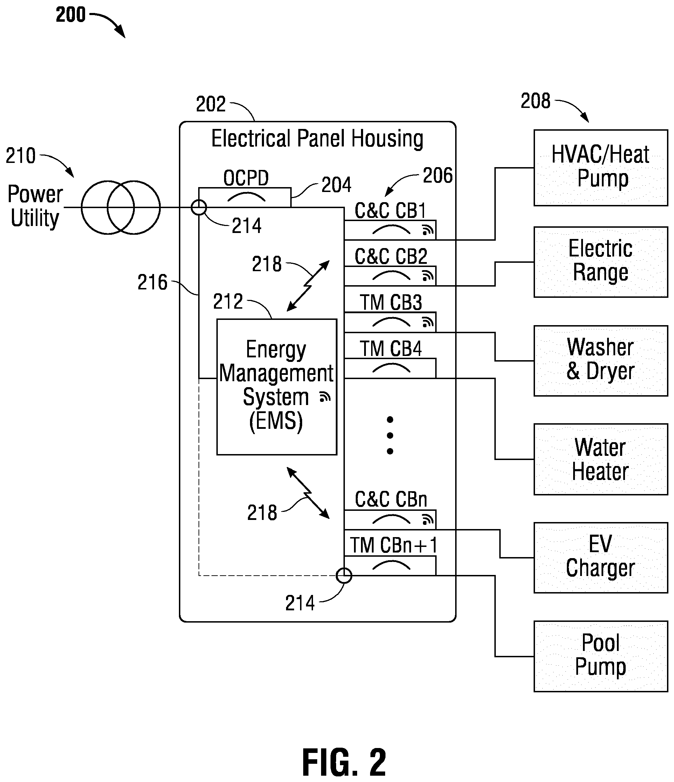

Referring next to FIG. 2, an exemplary load center 200 is shown that can operate in an overloaded state while minimizing or eliminating thermal tripping, in accordance with embodiments of the present disclosure. The load center 200 in this example resembles a typical electrical panel for a residential dwelling insofar as there is panel housing 202 and a number of electrical switching and protection devices installed within the housing 202. Thus, there is a main breaker 204 that serves as an overcurrent protection device (OCPD) for the entire load center 200, and a series of branch breakers 206 that provide protection for various electrical loads 208 at the residential dwelling. Power for these electrical loads 208 comes from a utility power source 210, such as an electrical power plant. It should be noted that although a residential load center 200 is shown in this example, those having skill in the art will appreciate that the principles herein are also applicable to commercial and other types of nonresidential load centers.

In the example of FIG. 2, the main breaker 204 may be a typical thermomagnetic circuit breaker, while the branch breakers 206 may include a combination of controlled branch devices and relays, such as communication and control circuit breakers, labeled "C&C CBn," as well as non-controlled branch devices and relays, such as thermomagnetic circuit breakers, labeled "TM CBn," where "n" represents the circuit breaker number. Other types of devices may also be used as the OCPD and/or the branch breakers, such as surge protectors and other electrical switching and protection devices. The use of C&C breakers is particularly advantageous, however, as these so-called "smart" circuit breakers feature a number of advances over traditional circuit breakers. For example, C&C circuit breakers can measure and log the amount of current flowing to their respective loads, and can transmit this information in real time to a remote monitoring and control application over a wired or wireless communication network (e.g., Modbus, DNP3, BACnet, Wi-Fi, Bluetooth, ZigBee, etc.). In a similar manner, C&C circuit breakers can also be remotely controlled by a monitoring and control application to disconnect or shed their loads, and subsequently reconnect their loads, as needed.

The loads 208 connected to the load center 200 of FIG. 2 may include common or traditional loads, such as an HVAC unit or a heat pump, electric range, washer and dryer, and water heater. In the example, however, additional loads were subsequently added to the load center 200, including an EV charger and a pool pump, that were not accounted for at the time the load center 200 was installed. As a result, these additional loads may cause the amount of current flowing through the load center 200 to exceed its current rating when all the loads 208 are running at the same time. When this happens, depending on the overcurrent level and duration, the overload may cause the main breaker 204 to trip and interrupt current flow to every load 208.

In accordance with embodiments of the present disclosure, the load center 200 is equipped with an energy management system (EMS) 212 that can mitigate the above overload situation. The energy management system 212 is configured to monitor the load center energy level, which is the energy level that passes through the main breaker 204, and also the energy level passing through certain branch breakers 206 to their respective loads 208. To this end, an energy sensing device 214, which may be a current meter or a simple current transformer in some embodiments, is installed at the main breaker 204 to measure the amount of energy passing through the main breaker 204. The energy information may then be transmitted to the energy management system 212 in real time over an appropriate connection 216 to monitor the load center energy level. Similar energy information may be transmitted in real time from the branch breakers 206, either over a wireless connection 218 from the C&C breakers (i.e., CB1, CB2, CBn, etc.) that come equipped with such capability, or via an optional energy sensing device 214 that may be installed at selected TM breakers. Based on this energy information, the energy management system 212 can determine an amount of time that the load center 200 may be operated in an overloaded state without reaching a point that causes thermal tripping of the main breaker 204.

Thus, by keeping track of the load center energy level, and hence the thermal increase and decreases in the load center 200, the energy management system 212 can determine when to disconnect certain individual loads 208 in order to bring the load center energy to a level where the main breaker 204 does not trip. As alluded to above, the ability to avoid interruptions of the various loads 208 provides significant benefits. Frequent interruptions can cause damage to certain loads 208 and their normal operation, which can reduce their lifetime and/or incur additional maintenance cost to the homeowner or user. Keeping these interruptions, or nuisance trips, to a minimum helps improve user satisfaction and also keeps these loads 208 running normally, as well as preventing the load center 200 from shutting down power for the entire residential dwelling in the event the homeowner needs to use power temporarily above the rated amount.

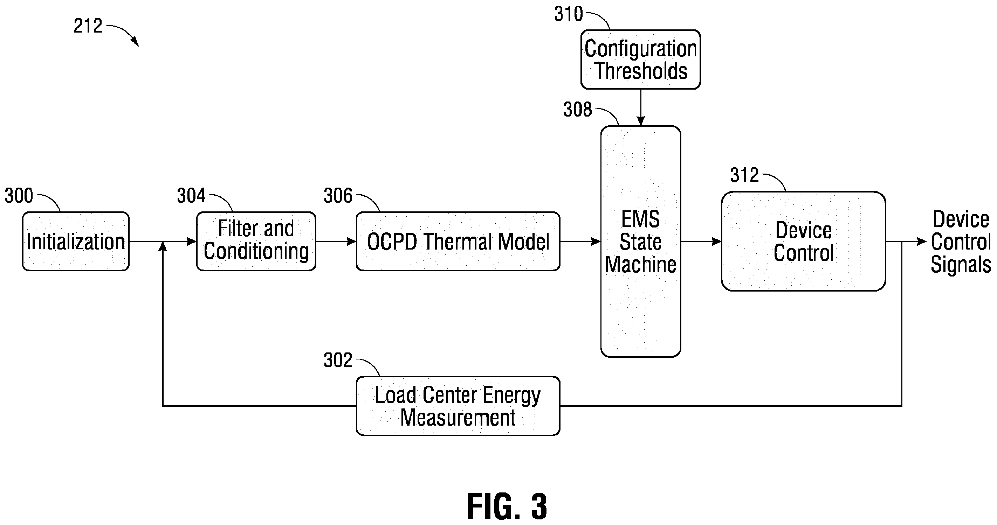

FIG. 3 is a functional block diagram illustrating an exemplary implementation of the energy management system 212 in accordance with embodiments of the present disclosure. As can be seen, the system 212 includes an initialization block 300 that is configured to set up or prepare the system to begin operation, such as initializing variables, allocating appropriate memory and processing resources, setting up configuration parameters, and similar tasks. The system 212 also includes a load center energy measurement block configured to receive or acquire energy measurements from the main breaker 204 and one or more, or all, of the branch breakers 206, as discussed above. The measurements may be in the form of analog signals in some embodiments, or they may be in the form of digital data in some embodiments, depending on the particular application. A filter and conditioning block 304 operates to enhance, clean, and otherwise remove any noise or unwanted components from the measurements, such as by applying an exponential moving average to the measurements.

The energy management system 212 also includes a thermal model block 306 that operates to apply a thermal model of the OCPD to the filtered and conditioned load center energy measurements. The OCPD in the present example is the main breaker 204 and, in some embodiments, the load center energy level being monitored may be the amount of current passing through the main breaker 204. In these embodiments, the thermal model may resemble a trip curve for a thermomagnetic circuit breaker similar to the trip curve 100 from FIG. 1, or a data representation of such a trip curve (e.g., a data table). In other embodiments, the load center energy level that is monitored may be voltage, or wattage, or resistance, or other properties that can provide an indication of the thermal state of the main breaker 204, or the bimetallic strip therein. In either case, the thermal model block 306 uses the load center energy measurements and the thermal model of the OCPD to generate several energy parameters that provide an indication of the current thermal state of the main breaker 204, as discussed further below.

A state machine 308 may be included in the energy management system 212 in some embodiments to process the energy parameters generated or provided by the thermal model block 306. A state machine, as those skilled in the art understand, includes any computational device that can transition from one state to another in response to one or more inputs. Such a state machine 308 may be implemented in hardware, software, or some combination thereof (i.e., firmware), including as a lookup table, in some embodiments. The state machine 308 operates to compare the parameters provided by the thermal model block 306 against one or more load center constraints and configuration thresholds stored in a configuration threshold database 310. Based on this comparison, the state machine 308 determines whether the load center is in an overloaded state, whether sufficient time remains for making decisions regarding load shedding to avoid a thermal trip, or whether load shedding should begin immediately to avoid a magnetic trip.

A device control block 312 operates to implement any decisions arrived upon by the state machine 308. The device control block 312 is configured to communicate with and remotely control one or more, or all, of the branch breakers 206 to shed their respective loads 208, if needed. In some embodiments, the shedding of the loads 208 is performed in an ordered sequence that is established based on predefined priority list, which load priority list may be stored in the configuration threshold database 310 in some embodiments. Thus, for example, if the state machine 308 determines that shedding needs to occur to avoid thermal tripping of the main breaker 204, then the device control block 312 instructs the branch breaker for the EV charger to shed its load first, followed by the branch breaker for the electric range if needed, followed by the branch breaker for the HVAC unit if still needed, and so forth. Likewise, the device control block 312 can also communicate with the branch breakers 206 to reconnect their respective loads 208, when thusly indicated by the state machine 300 date.

In some embodiments, as discussed above, the thermal model used by the thermal model block 306 may resemble a trip curve for a thermomagnetic circuit breaker similar to the trip curve 100 in FIG 1. As also mentioned above, the energy level being monitored and modeled by the thermal model in the present example is specifically current level. Such a thermal model involves using the specific heat transfer of the particular bimetallic materials used in the circuit breaker, as generally expressed by Equation (1), Newton's Law of heat loss, as expressed by Equation (2), and the Ohmic heat generation of the bimetallic strip, as expressed by Equation (3):

$$Q(t) = m * C * dT/dt \qquad (1)$$

where m is the mass of the bimetallic strip, c is the specific heat capacity of the metallic material(s), and $dT/dt$ is the rate of change of temperature $T$ over time.

$$Q_{loss}(t) = h * A * (T - T_{ambient}) \qquad (2)$$

where h is the convective heat transfer coefficient, A is the surface area of the bimetallic strip, $T$ is the temperature of the bimetallic strip, and $T_{ambient}$ is the ambient temperature difference.

$$Q_{heat}(t) = R_{OCPD} * i_{OCPD}^2 * t \qquad (3)$$

where $R_{OCPD}$ is the main breaker impedance and $i_{OCPD}$ is the main breaker current.

It should be noted that a bimetallic strip when fashioned in a cantilever cut has a thermal deflection due to the temperature change over time. As the bimetallic strip in a circuit breaker is constructed in cantilever strips and calibrated based on a specific current rating and specific temperature, the deflection can be determined from the temperature change expressed in the equations above.

Other techniques for implementing the thermal model of the thermal model block 306 include the use of one or more lookup tables containing model values derived from empirical data. The use of such lookup tables for the thermal model may be advantageous in some embodiments compared to calculating or computing the above heat equations, Equations (1) to (3), to derive the model values, as different OCPDs have different cantilever dimensions and different bimetallic materials, and the heat equations for these OCPDs are different due to different specific heat coefficients, bimetal mass, and calibration settings, and the like. The state machine 308 may then retrieve any model values that it may need to perform its processing for the particular main breaker 204 involved from the one or more lookup tables.

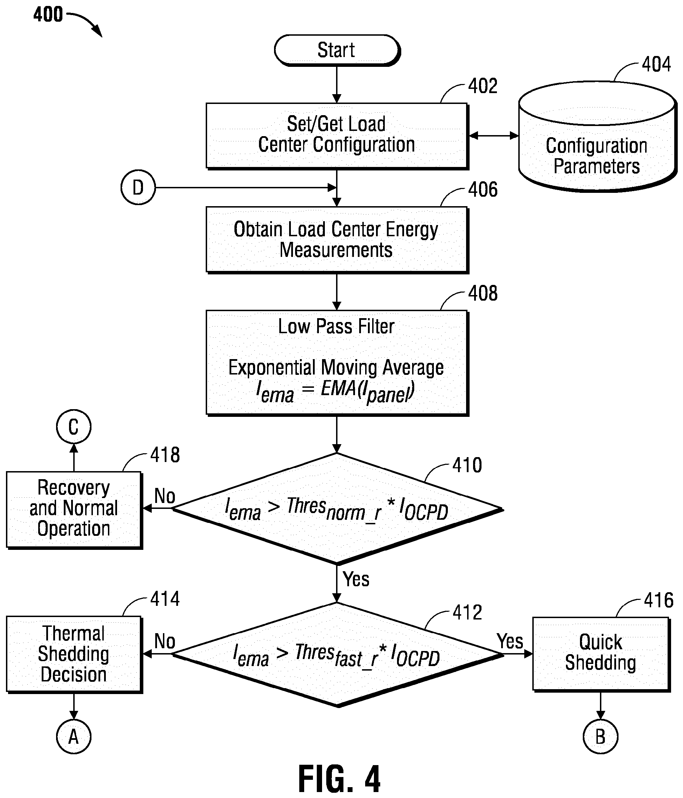

Operation of the energy management system 212 and the state machine 308 therein is illustrated in FIG. 4 via an exemplary flow diagram 400. The flow diagram 400 generally begins at block 402 where the system 212 obtains one or more configuration parameters for the particular circuit breaker involved (i.e., main breaker 204), or otherwise establishes one or more configuration parameters based on the obtained configuration parameters. The obtained configuration parameters may be acquired from a configuration parameters database 404, which may reside locally in the system 212, or at a remote location on a network. Such configuration parameters may include, for example, a load center rating (i.e., main breaker handle rating), a thermal model for the load center (i.e., trip curve), and any other configuration parameters as needed herein.

At block 406 the energy management system 212 obtains a measurement of the load center energy level, which is the instantaneous load center current ($I_{panel}$) in the present example, via a current sensing device (i.e., current sensing device 214) installed at the circuit breaker. The system 212 may similarly obtain a measurement of the energy level in one or more of the loads ($I_{L[n]}$) via their respective branch breakers (i.e., branch breakers 206). At block 408, the system 212 applies a low pass filter to the energy level measurements to remove any temporary spikes that may have occurred during startup of one or more loads (i.e., inrush current). At this point, the system 212 also obtains an exponential moving average of the load center energy level in order to remove any transient measurements that may appear ($I_{ema} = EMA(I_{panel})$).

At block 410, the energy management system 212 makes a determination whether the exponential moving average of the load center energy level is greater than the load center current rating ($I_{OCPD}$) multiplied by a thermal shedding ratio ($Thres_{norm\_r}$) that reflects an amount of overload under which the load center needs to begin making decisions about load shedding ($I_{ema} > Thres_{norm\_r} * I_{OCPD}$). This thermal shedding ratio ($Thres_{norm\_r}$) may be selected as needed for a particular application and may be set at unity (i.e., 1/1) in some embodiments, meaning that the amount of overload under which the load center needs to begin making decisions about load shedding is 100 percent of the load center rated current. Other examples of the thermal shedding ratio ($Thres_{norm\_r}$) that may be used include 50 percent, 66.7 percent, 75 percent, 80 percent, and the like (i.e., 1/2, 2/3, 3/4, 8/10, etc.). If the determination at block 410 is yes, then the system 212 proceeds to make another determination at block 412 whether the exponential moving average of the load center energy level is greater than the load center current rating ($I_{OCPD}$) multiplied by a fast shedding a ratio ($Thres_{fast\_r}$) that reflects an amount of overload under which the load center needs to shed a load immediately to avoid a magnetic trip ($I_{ema} > Thres_{fast\_r} * I_{OCPD}$). This fast shedding ratio ($Thres_{fast\_r}$) may also be selected as needed for a particular application and may be set at 3 (i.e., 3/1) in some embodiments, meaning that the amount of overload under which the load center needs to begin load shedding immediately is 300 percent of the load center rated current. In some embodiments, the system 212 may obtain the values for the thermal shedding ratio ($Thres_{norm\_r}$) and the fast shedding a ratio ($Thres_{fast\_r}$) from the configuration parameters database 404.

If the determination at block 412 is no, then the energy management system 212 proceeds a thermal shedding state at block 414 to begin making decisions regarding thermal shedding. If instead the determination at block 412 is yes, then the system 212 proceeds a quick shedding state at block 416 to immediately begin load shedding. On the other hand, if the determination at block 410 is no, then the system 212 proceeds to a recovery and normal operation state at block 418.

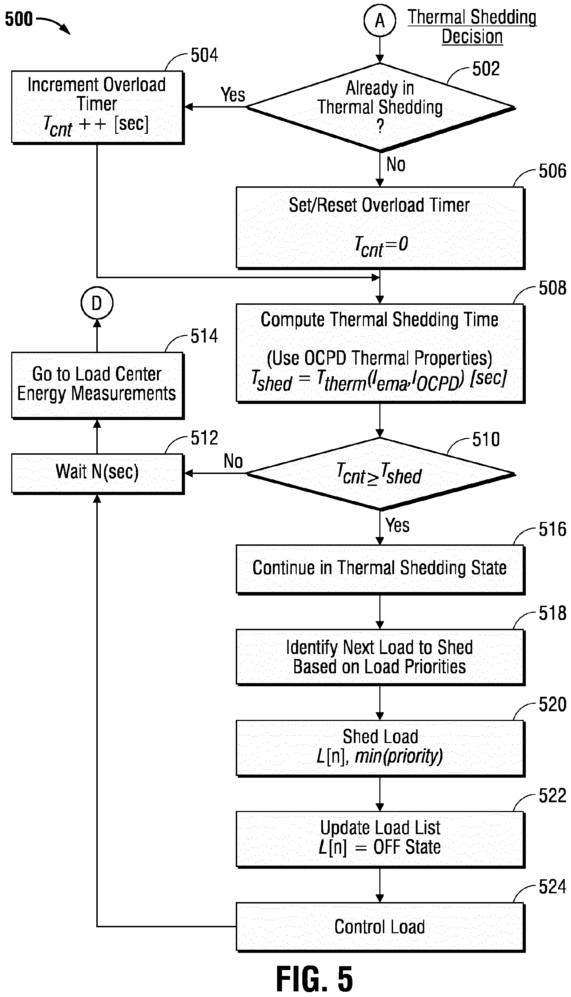

FIG. 5 shows an exemplary flow diagram 500 that may be used by the thermal management system 212 for making thermal shedding decisions in the thermal shedding state. The diagram 500 begins at block 502 where the system 212 determines whether it was already in a thermal shedding state. If the determination is yes, then the system 212 continues to increment an overload timer ($T_{cnt}$) from its current count. If the determination is no, then the system 212 proceeds to set/reset the overload timer at block 506 to a value of $0$ ($T_{cnt} = 0$). At block 508, the system 212 calculates or otherwise computes a thermal shedding time ($T_{shed}$) that serves as a margin or threshold against thermal tripping. This thermal shedding time ($T_{shed}$), which may be in seconds, may be calculated based on or using the thermal properties of the circuit breaker involved ($T_{shed} = T_{therm}(I_{ema}, I_{OCPD})$), where $T_{therm}$ is a function of the exponential moving average of the load center energy level ($I_{ema}$) and the load center current rating ($I_{OCPD}$).

In the foregoing, $T_{therm}$ is a temperature rise function. Several techniques are available to those having skill in the art for determining $T_{therm}$ as a function of the exponential moving average of the load center energy level ($I_{ema}$) and the load center current rating ($I_{OCPD}$). For example, $T_{therm}$ may be determined using a lookup table in some embodiments, with the load center energy level ($I_{ema}$) and the load center current rating ($I_{OCPD}$) used as the inputs to the lookup table. The values in such a lookup table may be derived empirically from experimental or observed data in some embodiments, or the values may be derived mathematically using one or more of Equation (1) to (3) in conjunction with the trip curve for the particular circuit breaker involved. Table 1 below shows an exemplary table that may be used as a lookup table for values of $T_{therm}$.

**TABLE 1: $T_{therm}$ Lookup Table**

|  | $I_{OCPD}(1)$ | $I_{OCPD}(2)$ | ... | $I_{OCPD}(n)$ |
|---|---|---|---|---|
| $I_{ema}(1)$ | $T_{therm}(1, 1)$ | $T_{therm}(1, 2)$ | ... | $T_{therm}(1, n)$ |
| $I_{ema}(2)$ | $T_{therm}(2, 1)$ | $T_{therm}(2, 2)$ | ... | $T_{therm}(2, n)$ |
| ... | ... | ... | ... | ... |
| $I_{ema}(m)$ | $T_{therm}(m, 1)$ | $T_{therm}(m, 2)$ | ... | $T_{therm}(m, n)$ |

At block 510, the energy management system 212 makes a determination whether the overload counter ($T_{cnt}$) meets or exceeds the thermal shedding time ($T_{shed}$). If the determination is no, then the system 212 waits a predefined number of seconds (N(sec)) at block 512, and proceeds to obtain the next load center energy measurement at block 514, as discussed with respect to the flow diagram 400 in FIG. 4. On the other hand, if the determination at block 510 is yes, then the system 212 continues in the thermal shedding state at block 516, and identifies the next load (L[n]) that needs to be shed at block 518 based on a predefined load priority scheme. The load priority scheme may be stored in the configuration parameters database 404 in some embodiments, and may specify load priority, for example, based on the amount of current required by the load, such that larger loads take higher priority over smaller loads, or vice versa. Alternatively, load priority may be specified based on user selection, such that preferred loads take higher priority over non-preferred loads. It is also possible to combine several load priority schemes, for example, in the event of a tie between two loads. Other load priority ranking strategies may also be used within the scope of the disclosed embodiments. In some embodiments, the system 212 may obtain the priority scheme (or schemes) to be used from the configuration parameters database 404.

At block 520, the energy management system 212 proceeds to shed the load that has been identified in the previous block, for example, by issuing an instruction to cause that load to be shed. In the present example, the load with the lowest priority that remains in an On state is the load that is shed (L[n], min(priority)). The system 212 thereafter proceeds to update the load list at block 522 to reflect the shedding of that load (L[n] = OFF State). A control or command signal is then sent from the system 212 to the branch breaker for the identified load that is appropriately configured (i.e., formatted) to cause the breaker to shed that load at block 524. The system 212 thereafter proceeds to block 512 and continues as discussed above.

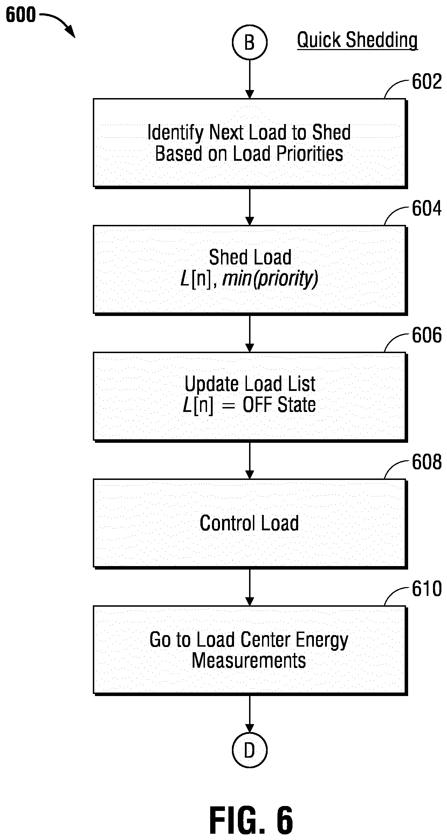

FIG. 6 shows an exemplary flow diagram 600 that may be used by the thermal management system 212 in the quick shedding state. When the system 212 is in the quick shedding state, no decision is made regarding whether to begin load shedding, but instead load shedding begins immediately. The diagram 600 begins at block 602 where the system 212 identifies the next load (L[n]) that needs to be shed based on a predefined load priority scheme. In some embodiments, the load priority scheme may be the same scheme (or schemes) discussed with respect to the flow diagram 500 of FIG. 5, or an alternative load priority scheme may be used, within the scope of the disclosed embodiments. In either case, the system 212 proceeds to shed the load that has been identified at block 604, for example, by issuing an instruction for that load to be shed. The load with the lowest priority that remains in an On state is then shed (L[n], min(priority)). The system 212 thereafter proceeds to update the load list at block 606 to reflect the shedding of that load (L[n] = OFF State). A control or command signal is then sent from the system 212 to the branch breaker for the identified load, appropriately configured (i.e., formatted) to cause the breaker to shed that load at block 608. The system 212 thereafter proceeds to obtain the next load center energy measurement at block 610.

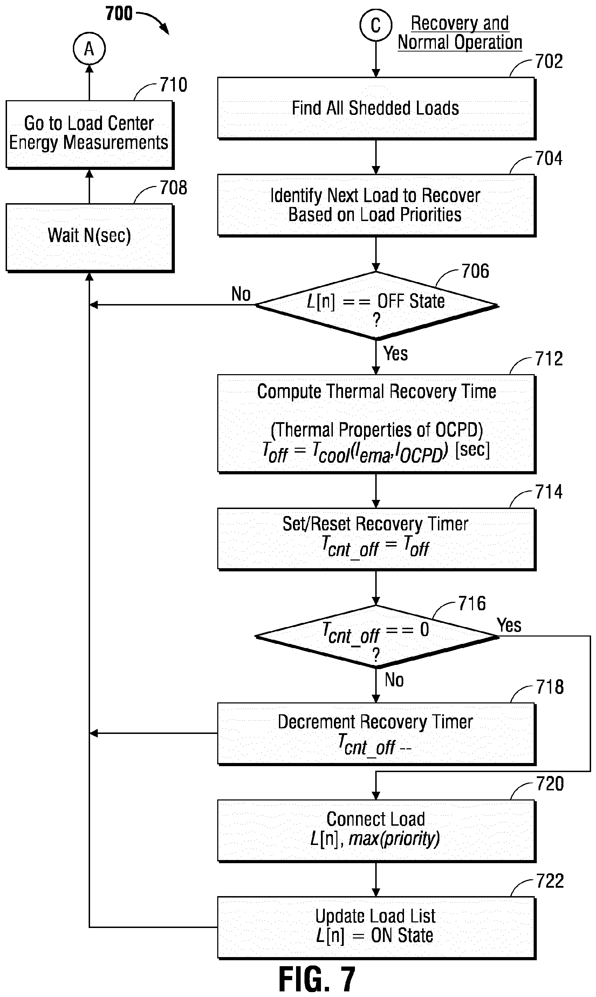

FIG. 7 shows an exemplary flow diagram 700 that may be used by the thermal management system 212 in the recovery and normal operation state. The diagram 700 begins at block 702 where the system 212 finds all loads that were previously shedded in either the thermal shedding state (FIG. 5) or the quick shedding state (FIG. 6). At block 704, the system 212 identifies the next load (L[n]) that needs to be recovered based on a predefined load priority scheme. As before, the load priority scheme may be the same scheme (or schemes) discussed with respect to the flow diagram 500 of FIG. 5, or an alternative load priority scheme may be used.

At block 706, the energy management system 212 makes a determination whether the load identified in the previous block remains in shedded state (L[n] = OFF State). If the determination is no, then the system 212 waits a predefined number of seconds (N(sec)) at block 708, and proceeds to obtain the next load center energy measurement at block 710, as discussed with respect to FIG. 4. If the determination is yes, then the system 212 proceeds to calculate or otherwise compute a thermal recovery time ($T_{off}$) at block 712 as a function of the thermal properties of the circuit breaker ($T_{off} = T_{cool}(I_{ema}, I_{OCPD})$). The thermal recovery time ($T_{off}$) provides a representation of the circuit breaker temperature decline gradient (i.e., a sort of thermal "memory" of the bimetallic strip) and can be used to indicate how long a load needs to remain shedded before it can be powered On again based on the thermal properties of the particular circuit breaker. At block 714, the system 212 sets/resets a recovery timer ($T_{cnt\_off}$) equal to the thermal recovery time ($T_{off}$).

In the foregoing, $T_{off}$ is a temperature decay function. As is the case with $T_{therm}$, several techniques are available to those having skill in the art for determining $T_{off}$ as a function of the exponential moving average of the load center energy level ($I_{ema}$) and the load center current rating ($I_{OCPD}$). For example, $T_{off}$ may be determined using a lookup table in some embodiments, with the load center energy level ($I_{ema}$) and the load center current rating ($I_{OCPD}$) again used as the inputs to the lookup table. The values in such a lookup table may again be derived empirically from experimental or observed data in some embodiments, or the values may be derived mathematically using one or more of Equation (1) to (3) in conjunction with the trip curve for the particular circuit breaker involved. Table 2 below shows an exemplary table that may be used as a lookup table for values of $T_{off}$.

**TABLE 2: $T_{off}$ Lookup Table**

|  | $I_{OCPD}(1)$ | $I_{OCPD}(2)$ | ... | $I_{OCPD}(n)$ |
|---|---|---|---|---|
| $I_{ema}(1)$ | $T_{off}(1, 1)$ | $T_{off}(1, 2)$ | ... | $T_{off}(1, n)$ |
| $I_{ema}(2)$ | $T_{off}(2, 1)$ | $T_{off}(2, 2)$ | ... | $T_{off}(2, n)$ |
| ... | ... | ... | ... | ... |
| $I_{ema}(m)$ | $T_{off}(m, 1)$ | $T_{off}(m, 2)$ | ... | $T_{off}(m, n)$ |

At block 716, the energy management system 212 makes a determination whether the recovery timer ($T_{cnt\_off}$) currently has a count of zero. If the determination is no, then the system 212 decrements the recovery timer ($T_{cnt\_off}$) from its current count at block 718. The system 212 then waits a predefined number of seconds (N(sec)) at block 708, and proceeds to obtain the next load center energy measurement at block 710, as discussed previously. On the other hand, if the determination at block 716 is yes, then the system 212 proceeds to connect the load that was identified above (L[n], max(*priority*)), for example, by issuing an instruction for that load to be shed. The system 212 thereafter updates the load list at block 722 to reflect that the shedded load has now been connected (L[n] = ON State). A control or command signal is then sent from the system 212 to the branch breaker for the identified load appropriately configured (i.e., formatted) to cause it to connect that load, and the system 212 thereafter proceeds to block 708 and continues as discussed above.

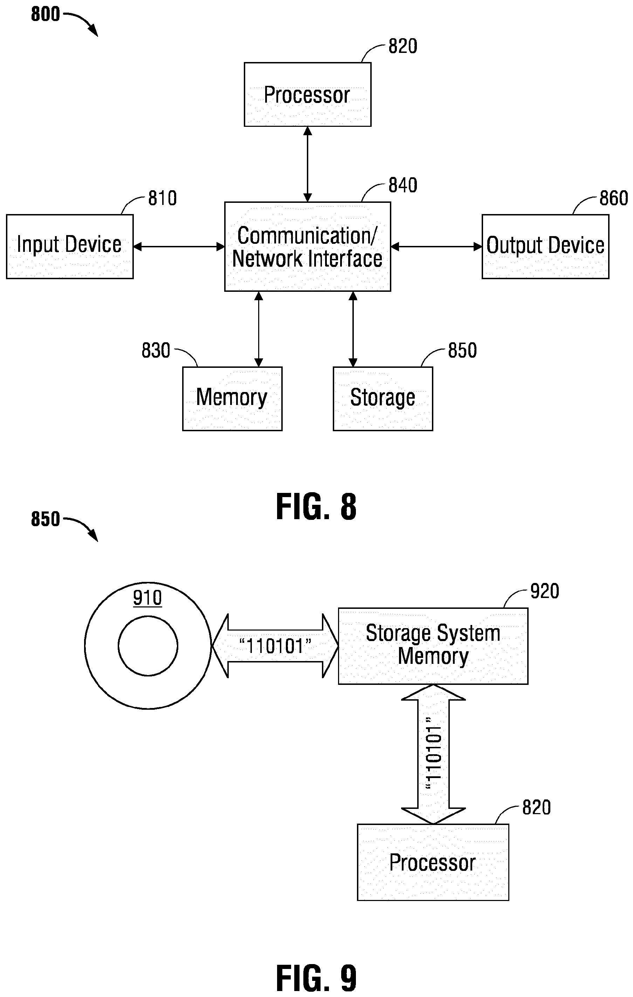

FIG. 8 illustrates an exemplary system that may be used to implement various embodiments of the energy management system discussed in this disclosure. For example, various embodiments of the disclosure may be implemented as specialized software executing in an energy management system 800 such as that shown in FIG. 8. The system 800 may include a processor 820 connected to one or more memory devices 830, such as magnetic or solid sate memory, either embedded and discrete, or other memory devices for storing data. Memory 830 is typically used for storing programs and data during operation of the system 800. The system 800 may also include a storage system 850 that provides additional storage capacity. Components of system 800 may be coupled by a communication interface 840, which may include one or more busses (e.g., between components that are integrated within the same machine) and/or a network interface 840 (e.g., between components that reside on separate discrete machines). The communication/network interface 840 enables communications (e.g., data, instructions) to be exchanged between system components of system 800 and system components of other systems on the network.

System 800 also includes one or more input devices 810, for example, keys, buttons, microphone, touch screen, and one or more output devices 860, for example, a display screen, LEDs, and the like. In addition, system 800 may contain one or more interfaces (not shown) that connect system 800 to a communication network (in addition or as an alternative to the interconnection mechanism 840).

The storage system 850, shown in greater detail in FIG. 9, typically includes a computer readable and writeable nonvolatile recording medium 910 in which signals are stored that define a program to be executed by the processor 820 or information stored on or in the medium 910 to be processed by the program to perform one or more functions associated with embodiments described herein. To this end, the processor 820 may be any suitable processing unit, such as a microprocessor, microcontroller, ASIC, and the like, and the medium any suitable recording medium, such as a magnetic or solid-state memory. Typically, in operation, the processor 820 causes data to be read from the nonvolatile recording medium 910 into storage system memory 920 that allows for faster access to the information by the processor than does the medium 910. This storage system memory 920 is typically a volatile, random access memory such as a dynamic random-access memory (DRAM) or static memory (SRAM). This storage system memory 920 may be located in storage system 850, as shown, or in the system memory 830. The processor 820 generally manipulates the data within the memory system 920 and then copies the data to the medium 910 after processing is completed. A variety of mechanisms are known for managing data movement between the medium 910 and the integrated circuit memory element 920, and the disclosure is not limited thereto. The disclosure is not limited to a particular memory 920, memory 830 or storage system 850.

The system 800 may include specially programmed, special-purpose hardware, for example, an application-specific integrated circuit (ASIC). Aspects of the disclosure may be implemented in software, hardware or firmware, or any combination thereof. Further, such methods, acts, systems, system elements and components thereof may be implemented as part of the system described above or as an independent component.

Although the system 800 is shown by way of example as one type of system upon which various aspects of the disclosure may be practiced, it should be appreciated that aspects of the disclosure are not limited to being implemented on the system as shown in FIG. 8. Various aspects of the disclosure may be practiced on one or more devices having a different architecture or components from that shown in FIG. 8. Further, where functions or processes of embodiments of the disclosure are described herein (or in the claims) as being performed on a processor or controller, such description is intended to include systems that use more than one processor or controller to perform the functions.

In the preceding, reference is made to various embodiments. However, the scope of the present disclosure is not limited to the specific described embodiments. Instead, any combination of the described features and elements, whether related to different embodiments or not, is contemplated to implement and practice contemplated embodiments. Furthermore, although embodiments may achieve advantages over other possible solutions or over the prior art, whether or not a particular advantage is achieved by a given embodiment is not limiting of the scope of the present disclosure. Thus, the preceding aspects, features, embodiments and advantages are merely illustrative and are not considered elements or limitations of the appended claims except where explicitly recited in a claim(s).

It will be appreciated that the development of an actual commercial application incorporating aspects of the disclosed embodiments will require many implementation-specific decisions to achieve a commercial embodiment. Such implementation specific decisions may include, and likely are not limited to, compliance with system related, business related, government related and other constraints, which may vary by specific implementation, location and from time to time. While a developer's efforts might be considered complex and time consuming, such efforts would nevertheless be a routine undertaking for those of skill in this art having the benefit of this disclosure.

It should also be understood that the embodiments disclosed and taught herein are susceptible to numerous and various modifications and alternative forms. Thus, the use of a singular term, such as, but not limited to, "a" and the like, is not intended as limiting of the number of items. Similarly, any relational terms, such as, but not limited to, "top," "bottom," "left," "right," "upper," "lower," "down," "up," "side," and the like, used in the written description are for clarity in specific reference to the drawings and are not intended to limit the scope of the invention.

This disclosure is not limited in its application to the details of construction and the arrangement of components set forth in the following descriptions or illustrated by the drawings. The disclosure is capable of other embodiments and of being practiced or of being carried out in various ways. Also, the phraseology and terminology used herein is for the purpose of descriptions and should not be regarded as limiting. The use of "including," "comprising," "having," "containing," "involving," and variations herein, are meant to be open-ended, i.e., "including but not limited to."

The various embodiments disclosed herein may be implemented as a system, method or computer program product. Accordingly, aspects may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects may take the form of a computer program product embodied in one or more computer-readable medium(s) having computer-readable program code embodied thereon.

Any combination of one or more computer-readable medium(s) may be utilized. The computer-readable medium may be a non-transitory computer-readable medium. A non-transitory computer-readable medium may be, for example, but not limited to, an electronic, magnetic, optical, electromagnetic, infrared, or semiconductor system, apparatus, or system, or any suitable combination of the foregoing. More specific examples (a non-exhaustive list) of the non-transitory computer-readable medium can include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage system, a magnetic storage system, or any suitable combination of the foregoing. Program code embodied on a computer-readable medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages. Moreover, such computer program code can execute using a single computer system or by multiple computer systems communicating with one another (e.g., using a local area network (LAN), wide area network (WAN), the Internet, etc.). While various features in the preceding are described with reference to flowchart illustrations and/or block diagrams, a person of ordinary skill in the art will understand that each block of the flowchart illustrations and/or block diagrams, as well as combinations of blocks in the flowchart illustrations and/or block diagrams, can be implemented by computer logic (e.g., computer program instructions, hardware logic, a combination of the two, etc.). Generally, computer program instructions may be provided to a processor(s) of a general-purpose computer, special-purpose computer, or other programmable data processing apparatus. Moreover, the execution of such computer program instructions using the processor(s) produces a machine that can carry out a function(s) or act(s) specified in the flowchart and/or block diagram block or blocks.

One or more portions of the computer system may be distributed across one or more computer systems coupled to a communications network. For example, as discussed above, a computer system that determines available power capacity may be located remotely from a system manager. These computer systems also may be general-purpose computer systems. For example, various aspects of the disclosure may be distributed among one or more computer systems configured to provide a service (e.g., servers) to one or more client computers, or to perform an overall task as part of a distributed system. For example, various aspects of the disclosure may be performed on a client-server or multi-tier system that includes components distributed among one or more server systems that perform various functions according to various embodiments of the disclosure. These components may be executable, intermediate (e.g., IL) or interpreted (e.g., Java) code which communicate over a communication network (e.g., the Internet) using a communication protocol (e.g., TCP/IP). For example, one or more database servers may be used to store system data, such as expected power draw, that is used in designing layouts associated with embodiments of the present disclosure.

Various embodiments of the present disclosure may be programmed using an object-oriented programming language, such as SmallTalk, Java, C++, Ada, or C# (C-Sharp). Other object-oriented programming languages may also be used. Alternatively, functional, scripting, and/or logical programming languages may be used, such as BASIC, Fortran, Cobol, TCL, Lua, Python, Rust or basic C. Various aspects of the disclosure may be implemented in a non-programmed environment (e.g., analytics platforms, or documents created in HTML, XML or other format that, when viewed in a window of a browser program render aspects of a graphical-user interface (GUI) or perform other functions). Various aspects of the disclosure may be implemented as programmed or non-programmed elements, or any combination thereof.

The flowchart and block diagrams in the Figures illustrate the architecture, functionality and/or operation of possible implementations of various embodiments of the present disclosure. In this regard, each block in the flowchart or block diagrams may represent a module, segment or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

Thus far, a number of features and advantages of embodiments of the present disclosure have been shown and described. Other possible features and advantages associated with the disclosed embodiments will be appreciated by one of ordinary skill in the art. It should also be understood that embodiments of the disclosure herein may be configured as a system, method, or combination thereof. Accordingly, embodiments of the present disclosure may be comprised of various means including hardware, software, firmware or any combination thereof.

While particular embodiments and applications of the present disclosure have been illustrated and described, it is to be understood that embodiments of the disclosure not limited to the precise construction and compositions disclosed herein and that various modifications, changes, and variations can be apparent from the foregoing descriptions without departing from the spirit and scope of the disclosure as defined in the appended claims.

## Claims

1.  An energy management system for a load center, the system comprising:

    a processor; and
    a storage unit coupled to the processor, the storage unit storing computer-readable instructions thereon that, when executed by the processor, cause the processor to:

    obtain a load center energy level from an overcurrent protection device in the load center, the load center energy level indicative of an amount of current flowing through the overcurrent protection device;
determine whether the load center is operating in an overloaded state based on the load center energy level; and
adjust the load center energy level of the load center according to a thermal model of the overcurrent protection device to allow the load center to operate in an overloaded state without tripping the overcurrent protection device.

2. The system of claim 1, wherein the computer-readable instructions further cause the processor to adjust the load center energy level of the load center by:

computing a thermal shedding time for the load center as a function of the load center energy level and a current rating of the overcurrent protection device;
determining whether the load center is operating in an overloaded state for an amount of time equal to or greater than the thermal shedding time; and
issuing, responsive to the load center operating in an overloaded state for an amount of time equal to or greater than the thermal shedding time, a control signal configured to cause a specified load to be shed from the load center.

3. The system of claim 2, wherein the computer-readable instructions cause the processor to compute the thermal shedding time for the load center in response to a determination that the load center energy level exceeds a thermal shedding threshold multiplied by the current rating of the overcurrent protection device.

4. The system of claim 1, wherein the computer-readable instructions cause the processor to adjust the load center energy level by immediately issuing a control signal configured to cause a specified load to be shed from the load center.

5. The system of claim 4, wherein the computer-readable instructions cause the processor to immediately issue the control signal configured to cause a specified load to be shed from the load center in response to the load center energy level exceeding a fast shedding threshold multiplied by a current rating of the overcurrent protection device.

6. The system of claim 1, wherein the computer-readable instructions cause the processor to adjust the load center energy level by:

computing a thermal recovery time for the load center as a function of the load center energy level and a current rating of the overcurrent protection device;
determining whether a load has been shed from the load center for a time equal to the thermal recovery time; and
issuing, responsive to the load having been shed from the load center for an amount of time equal to the thermal recovery time, a control signal configured to cause the load to be connected to the load center.

7. The system of claim 6, wherein the computer-readable instructions cause the processor to compute the thermal recovery time in response to the load being identified as having been shed from the load center.

8. The system of claim 1, wherein the thermal model of the overcurrent protection device is implemented as one or more lookup tables, and wherein the computer-readable instructions cause the processor to retrieve model values for the thermal model from the one or more lookup tables.

9. A method of managing a load center, the method comprising:

obtaining a load center energy level from an overcurrent protection device in the load center, the load center energy level indicative of an amount of current flowing through the overcurrent protection device;
determining whether the load center is operating in an overloaded state based on the load center energy level; and
adjusting the load center energy level of the load center according to a thermal model of the overcurrent protection device to allow the load center to operate in an overloaded state without tripping the overcurrent protection device.

10. A load center, comprising:

a housing;

an overcurrent protection device installed within the housing; and

an energy management system installed within the housing and communicatively coupled to the overcurrent protection device, the energy management system configured to:

obtain a load center energy level from the overcurrent protection device, the load center energy level indicative of an amount of current flowing through an overcurrent protection device;

determine whether the load center is operating in an overloaded state based on the load center energy level; and

adjust the load center energy level of the load center according to a thermal model of the overcurrent protection device to allow the load center to operate in an overloaded state without tripping the overcurrent protection device.

11. The load center of claim 10, wherein the energy management system adjusts the load center energy level of the load center by:

computing a thermal shedding time for the load center as a function of the load center energy level and a current rating of the overcurrent protection device;

determining whether the load center is operating in an overloaded state for an amount of time equal to or greater than the thermal shedding time; and

issuing, responsive to the load center operating in an overloaded state for an amount of time equal to or greater than the thermal shedding time, a control signal configured to cause a specified load to be shed from the load center.

12. The load center of claim 11, wherein the energy management system computes the thermal shedding time for the load center in response to a determination that the load center energy level exceeds a thermal shedding threshold multiplied by the current rating of the overcurrent protection device.

13. The load center of claim 10, wherein the energy management system adjusts the load center energy level by immediately issuing a control signal configured to cause a specified load to be shed from the load center,

wherein the energy management system in particular issues the control signal configured to cause a specified load to be shed from the load center in response to a determination that the load center energy level exceeds a fast shedding threshold multiplied by a current rating of the overcurrent protection device.

14. The load center of claim 10, wherein the energy management system adjusts the load center energy level by:

computing a thermal recovery time for the load center as a function of the load center energy level and a current rating of the overcurrent protection device;

determining whether a load has been shed from the load center for a time equal to the thermal recovery time; and

issuing, responsive to the load having been shed from the load center for an amount of time equal to the thermal recovery time, a control signal configured to cause the load to be connected to the load center,

wherein the energy management system in particular computes the thermal recovery time in response to the load being identified as having been shed from the load center.

15. The load center of claim 10, wherein the thermal model of the overcurrent protection device is implemented as one or more lookup tables, and wherein the energy management system retrieves model values for the thermal model from the one or more lookup tables.

**FIG. 1**

**200**

**202**
Electrical Panel Housing

**210**
Power Utility

**208**

OCPD **204**

**206**
C&C CB1

C&C CB2

TM CB3

TM CB4

**214**

**218**

**216**

**212**

Energy Management System (EMS)

**218**

C&C CBn

TM CBn+1

**214**

HVAC/Heat Pump

Electric Range

Washer & Dryer

Water Heater

EV Charger

Pool Pump

**FIG. 2**

**FIG. 3**

EP 4 686 023 A1

**FIG. 4**

$500$

(A) <u>Thermal Shedding Decision</u>

502 — Already in Thermal Shedding ?

**Yes** →

504 — Increment Overload Timer $T_{cnt}++$ [sec]

**No**

506 — Set/Reset Overload Timer $T_{cnt}=0$

(D)

508 — Compute Thermal Shedding Time (Use OCPD Thermal Properties) $T_{shed} = T_{therm}(I_{ema}, I_{OCPD})$ [sec]

514 — Go to Load Center Energy Measurements

510 — $T_{cnt} \geq T_{shed}$

**No** →

512 — Wait N(sec)

**Yes**

516 — Continue in Thermal Shedding State

518 — Identify Next Load to Shed Based on Load Priorities

520 — Shed Load $L[n]$, *min(priority)*

522 — Update Load List $L[n]$ = OFF State

524 — Control Load

## FIG. 5

**600**

B    <u>Quick Shedding</u>

602

Identify Next Load to Shed
Based on Load Priorities

604

Shed Load
$L[n]$, *min(priority)*

606

Update Load List
$L[n]$ = OFF State

608

Control Load

610

Go to Load Center Energy
Measurements

D

# FIG. 6

700

Ⓐ

710
Go to Load Center
Energy Measurements

708
Wait N(sec)

Ⓒ Recovery and
Normal Operation

702
Find All Shedded Loads

704
Identify Next Load to Recover
Based on Load Priorities

706
No — $L[n] == $ OFF State
?

Yes

712
Compute Thermal Recovery Time

(Thermal Properties of OCPD)
$T_{off} = T_{cool}(I_{ema}, I_{OCPD})$ [sec]

714
Set/Reset Recovery Timer
$T_{cnt\_off} = T_{off}$

716
$T_{cnt\_off} == 0$
? — Yes

No

718
Decrement Recovery Timer
$T_{cnt\_off}$ --

720
Connect Load
$L[n]$, max(priority)

722
Update Load List
$L[n] = $ ON State

# FIG. 7

**FIG. 8**

**FIG. 9**

Europäisches
Patentamt

European
Patent Office

Office européen
des brevets

# EUROPEAN SEARCH REPORT

**Application Number**

EP 25 18 8226

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/396055 A1 (NAKANO HIROSHI [JP] ET AL) 7 December 2023 (2023-12-07) * paragraphs [0031] - [0100]; figures 1-9 * | 1,6-10, 14,15 | INV. H02H3/093 H02H6/00 H02J3/14 H02H7/26 H02H3/033 |
| X | CZ 307 686 B6 (VS BANSKA TECHNICKA UNIVERZITA OSTRAVA [CZ]) 13 February 2019 (2019-02-13) * translation enclosed; Obr. 1-2 and Graf. 1-3; paragraphs [0010] - [0079] * | 1-7,9-14 | ADD. H02H3/00 |
| X | EP 2 100 357 B1 (SCHNEIDER ELECTRIC IT CORP [US]) 9 April 2014 (2014-04-09) * paragraphs [0050] - [0078]; figures 1-10 * | 1,9,10 | |
| A | WO 2016/059853 A1 (SHARP KK [JP]) 21 April 2016 (2016-04-21) * translation enclosed; paragraphs [0021] - [0072]; claims 1-5; figures 1-14 * | 1-15 | |
| A | US 2021/155179 A1 (LAVOIE CLAUDE [CA] ET AL) 27 May 2021 (2021-05-27) * paragraphs [0040] - [0055]; figures 3, 4B * | 1-15 | |

**TECHNICAL FIELDS SEARCHED (IPC)**

H02J
H02H

The present search report has been drawn up for all claims

| Place of search | Date of completion of the search | Examiner |
|---|---|---|
| Munich | 10 October 2025 | Gomes Guerreiro, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 18 8226

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2025

| Patent document cited in search report | | | Publication date | Patent family member(s) | | Publication date |
|---|---|---|---|---|---|---|
| US 2023396055 | A1 | | 07-12-2023 | CN | 116569433 A | 08-08-2023 |
| | | | | DE | 112021004810 T5 | 27-07-2023 |
| | | | | JP | 7449853 B2 | 14-03-2024 |
| | | | | JP | 2022103897 A | 08-07-2022 |
| | | | | US | 2023396055 A1 | 07-12-2023 |
| | | | | WO | 2022145095 A1 | 07-07-2022 |
| CZ 307686 | B6 | | 13-02-2019 | NONE | | |
| EP 2100357 | B1 | | 09-04-2014 | AU | 2008205155 A1 | 17-07-2008 |
| | | | | BR | PI0806497 A2 | 22-04-2014 |
| | | | | CA | 2673318 A1 | 17-07-2008 |
| | | | | CN | 101647167 A | 10-02-2010 |
| | | | | EP | 2100357 A2 | 16-09-2009 |
| | | | | EP | 2573890 A1 | 27-03-2013 |
| | | | | JP | 5337052 B2 | 06-11-2013 |
| | | | | JP | 2010515976 A | 13-05-2010 |
| | | | | KR | 20090104817 A | 06-10-2009 |
| | | | | RU | 2009129956 A | 10-02-2011 |
| | | | | US | 2008165461 A1 | 10-07-2008 |
| | | | | US | 2012126785 A1 | 24-05-2012 |
| | | | | WO | 2008086108 A2 | 17-07-2008 |
| WO 2016059853 | A1 | | 21-04-2016 | JP | 6386579 B2 | 05-09-2018 |
| | | | | JP | WO2016059853 A1 | 18-05-2017 |
| | | | | WO | 2016059853 A1 | 21-04-2016 |
| US 2021155179 | A1 | | 27-05-2021 | CA | 3100782 A1 | 27-05-2021 |
| | | | | CN | 112861247 A | 28-05-2021 |
| | | | | EP | 3828404 A1 | 02-06-2021 |
| | | | | US | 2021155179 A1 | 27-05-2021 |

EPO FORM P0459

For more details about this annex : see Official Journal of the European Patent Office, No. 12/82